# EUROPEAN PATENT SPECIFICATION

(11) **EP 1 280 592 B1**
(45) Date of publication and mention of the grant of the patent: **08.10.2008**
(21) Application number: 01934693.1
(22) Date of filing: 27.04.2001
(51) Int. Cl.: B01D 15/08

(54) **SEPARATION OF GLYCO-CONTAINING ENTITIES**
TRENNUNG VON GLYCO-ENTHALTENDEN EINHEITEN
SEPARATION D'ENTITES CONTENANT DU GLYCO

(30) Priority: 05.05.2000 SE 0001660
(43) Date of publication of application: 05.02.2003
(73) Proprietor: Protista International AB, 26722 Bjuv (SE)
(72) Inventor: LI, YuCai, S-227 33 Lund (SE); GALAEV, Igor, S-226 46 Lund (SE); JUNGVID, Hans, S-25733 Rydebäck (SE); LINNE LARSSON, Eva, S-224 66 Lund (SE); MATTIASSON, Bo, S-245 62 Hjärup (SE)
(74) Representative: Karlström, Lennart
(86) International application number: PCT/SE2001/000925
(87) International publication number: WO 2001/085296

(56) References cited:
- US-A- 5 981 716
- DATABASE WPI Week 199350, Derwent Publications Ltd., London, GB; AN 1993-400388, XP002957066 & JP 5 301 880 A (NIPPON OILS & FATS CO LTD) 16 November 1993

## Description

### Technical field

The present invention relates to the separation of glyco-containing entities. More particulary, the present invention relates to a method for the separation of at least one glyco-containing entity dissolved/suspended in a liquid and a method of reducing interactions others than glyco-boronate in boronate chromatography of samples including glyco- and non-glyco-containing entities.

### Background art

Glycoproteins are proteins containing carbohydrates which are attached to a polypeptide backbone by covalent linkage. They occur in fungi, green plants, bacteria, viruses and higher animal cells where they serve a variety of functions. These functions may be grouped within a number of headings, i.e. those glycoproteins, which form structural elements include cell wall glycoproteins of yeasts and green plants, as well as the connective tissue glycoproteins such as the collagens and proteoglycans of various animal species. Some glycoproteins perform as transport proteins in blood plasma, e.g. transferrin and ceruloplasmin. Other form components of plasma membranes and act as antigenic determinants or as hormone- or virus-receptors and play a role in cell surface interactions. In addition, quite a few enzymes are glycosylated, including ribonuclease, deoxyribonuclease, α-amylase and invertase.

Well-defined glycoproteins both in the terms of the peptide sequence and carbohydrate content are needed for study of their structure-function relationship; for special biological uses, in therapy and for a full chemical description when they are subjected for medical legislation. However, glycoproteins in a homogeneous form cannot be easily isolated by a uniform procedure because of the diversity in both the degree of glycosylation and the type of monosaccharides involved. Compared with non-glycosylated proteins, the microheterogeneity or polydispersity in glycoproteins requires more considerations on their purification and characterization.

Affinity chromatography is often chosen for the isolation of glycoproteins. Thus, for instance, the ability of boronate to form complexes with hydroxyl groups in carbohydrates is exploited in boronate affinity chromatography [1]. The interaction is not only specific for carbohydrates, as any compound containing hydroxyl groups in a proper orientation will form a moderately stable complex with the boronate. As a consequence boronate chromatography can, for example, be used for the separation of glycoproteins, nucleosides and catechol compounds [2-4]. A variety of other functional groups such as α-hydroxycarboxylic acids, aromatic α-hydroxy acids and amides can also interact with boronates. These functional groups can be found in the compounds like lactic acid, salicylic acid, salicylamide and steroids [5,6].

There are also examples given in the literature of interactions between boronates and non-glycosylated enzymes such as lactamases [7], subtilisin BPN'[8], trypsin [9], α-chymotrypsin [10], pepsin [11] and β-amylase [12]. One presumption is that the complex formed between the boronate and the enzyme mimics the transition state complex. Enzyme inhibition studies are used to demonstrate this hypothesis [8, 9, 13]. Other reports emphasize that secondary interactions are responsible for the complex formation [12, 14].

Although boronate chromatography was introduced in the 1970s, the number of successful applications for purification of glycoproteins is still limited. One explanation might be the existence of protein-boronate complex formation that reduces the capacity and purification efficiency of this method. Boronate chromatography would be a much more powerful tool in glycoprotein purificaiton schemes if it was possible to only facilitate the interactions of boronate ligands with the carbohydrate moieties of glycoproteins by selectively eliminating the interactions with the protein backbone.

US-A-5,981,716 (Zanette et al) relates to the chromatographic purification of a glycoprotein. The process comprises the steps of (i) contacting a filtered culture fluid with a dihydroxyboronyl bearing a chromatographic support, (ii) eluting with a first eluting buffer and contacting this eluate with an anion exchange matrix bearing quaternary ammonium functional groups, and (iii) eluting with a second eluting buffer and collecting the product therefrom. This prior art document does not disclose or teach adding a liquid containing a substance capable of forming a complex with the boronate ion to the culture fluid. While the prior art document discloses a washing step using a 1,2-cys-diol containing a low molecular weight substance such as a polyol, the 1,2-cys-diol does not exhibit the "shielding" effect as in the present invention, i.e. the 1,2-cys-diol is not added to the sample prior to contacting the sample with the boronate support polymer. The prior art document teaches the use of TRIS, but as an elutant. It does not disclose forming a sample containing a glyco-containing entity and TRIS before binding to the boronate support polymer.

### Disclosure of the invention

It is an object of the present invention to provide a method for the separaton of at least one glyco-containing entity such as a glycoprotein from a liquid by using boronate chromatography in which interactions others than glyco-boronate primarily of non-glycosylated proteins as well as binding to the protein backbone are considerably reduced or eliminated.

It is another object of the present invention to provide a method of purifying a crude glycoprotein product from non-glycosylated protein impurities to obtain a substantially pure glycoprotein product.

It is a further object of the present invention to provide a method by means of which glyco-containing entities of different types and/or degrees of glycosylation can be separated from each other.

It is yet another object of the present invention to reduce interactions others than glyco-boronate of non-glycosylated entities, e.g. binding to the protein backbone, in boronate chromatography of samples including glyco- and non-glyco-containing entities.

In the boronate chromatography technique for the separation of glyco-containing entities from a sample, said entities, dissolved or suspended in a liquid, are contacted with a polymer, which has boronic acid covalently coupled to said polymer and has previously been equilibrated with said liquid, to form a boronate-glyco-complex whereafter the glyco-containing entities are released from the boronate-modified polymer.

The present invention is based on the discovery that when adding tris(hydroxymethyl)aminomethane (Tris) to the liquid in a boronate chromatography method for the separation of glyco-containing entities the interactions others than glyco-boronate were substantially reduced. This effect was most surprising in view of the fact that it is recommended in literature to avoid using Tris and other compounds containing polyhydroxyls during boronate chromatography, since such substances can reduce the binding capacity of the boronate matrix by direct competition [14, 15]. However, further investigations by the present inventors revealed that a well-controlled addition of certain chemicals containing polyhydroxyl groups can increase the separation efficiency remarkably.

Thus according to the present invention there is provided a method for the separation of at least one glyco-containing entity dissolved/suspended in a buffer solution, which method comprises the steps of:
(a) equilibrating a polymer, which polymer has a boronic acid covalently coupled thereto, with said buffer solution;
(b) contacting said at least one glyco-containing entity dissolved/suspended in said buffer solution with the polymer equilibrated according to step (a) to form a boronate-glyco-complex; and
(c) releasing said glyco-containing entity or entities from the boronate-modified polymer;
wherein the buffer solution used in step (a) and (b) contains one or more substances capable of forming complexes with boronic acids/boronate anions, wherein the bindings in the complexes are weaker than the boronate-glyco-complex but stronger than complexes formed by interactions others than glyco-boronate.

The substance capable of forming complexes with boronic acids/boronate anions is thus adsorbed in accordance with the present invention to the affinity matrix polymer via single or multipoint attachment to the boronate anions. The binding is relatively weak as compared to the specific interactions between the boronate anions and the target biomolecules, e.g. glycoproteins. Said substance therefore specifically protects the boronate anions from still weaker non-specific interactions. The strong specific interactions are not affected and can be realised even in the presence of said substance. As a result, a significant improvement of the chromatography efficiency is obtained. The concept of using substances binding to an affinity matrix with comparatively weak interaction to protect from non-specific interactions has been termed "molecular shielding" and has been used for suppressing non-specific interactions in dye affinity chromatography [16, 17].

The term "chromatography" as used here and in the claims is intended to include purification techniques based on bindning to boronic acid/anions coupled to a polymer.

The term "glyco-containing entity" as used here and in the claims is intended to cover all kinds of glyco-conjugates but glycoproteins and -peptides are the primarily contemplated glyco-conjugates.

The term "glycoproteins" as used here and in the claims is intended to encompass naturally occurring glycoproteins and -peptides as well as glycoproteins and -peptides synthetically prepared (neoglycoproteins).

Liquids to be used as the liquid in which the glyco-containing entity is dissolved/suspended in the method according to the present invention are substantially the same as those conventionally used in boronate chromatography except that a substance capable of forming complexes of a certain strength with boronic acids/boronate anions has been added.

In order to form complexes with boronate/boronic acid, the solution should have an appropriate pH-value, depending on the type of covalent coupling of boronic acid to the matrix. In the case of coupling of boronate/boronic acid via a phenyl residue, pH is usually in the range of 7.5 to 8.5, preferably 8.0. One example of a buffer to be used as said liquid in the method of the present invention is 0.02M N-(2-hydroxyethyl)piperazine-N'-(3-propanesulfonic acid) (EPPS) -NaOH + 0.5 NaCl + substance capable of forming a complex with boronate/ boronic acid.

A preferred group of substances to be used as the substance capable of forming complexes with boronic acids/boronate anions (the "shielding substance") comprises substances which contain a structure of the formula (HOCH₂)₃C- or (HOCH₂CH)₃N. Exemples of such substances are:
Pentaerythritol, tris(hydroxymethyl)aminomethane, triethanolamine, N-tris-(hydroxymethyl)methyl-2-aminoethanesulfonic acid, 1,1,1-tris(hydroxymethyl)ethane, N-tris-(hydroxymethyl)methyl-acrylamide, trimethylolpropane.

Another perferred group of substances to be used as a shielding substance in accordance with the present invention comprises polyols, mono- and disaccharides and polymers. Examples thereof are: D-mannitol, D-sorbitol, D-fructose, xylitol, D-threitol, polyvinyl alcohol, D-ribose, D-lactose, D-arabinose, D-galactose, S(+)-erythrulose hydrate, D-maltose, D-glucose and sucrose.

Another example of a substance which can be used as a shielding substance in accordance with the present invention is (1R, 3R, 4R, 5R)-quinic acid.

Examples of useful substances also include mono-, di- and oligoglucosides and other derivatives containing vicicinal hydroxyl groups and capable of interacting with boronic acid/boronate anions. The fitness of a certain substance to be used as a shielding substance and the optimum concentration for its use can be investigated as follows:

A chromatographic column is first equilibrated with a buffer containing no shielding substance. Then a solution of a protein P causing interaction with the boronate anion dissolved in the same buffer is loaded onto the column. The column is washed thoroughly with the same buffer until there is no protein absorption in the effluent. Elution is then carried out by applying a linear concentration gradient of the investigated shielding substance dissolved in the buffer. The column is finally regenerated with acetic acid (e.g. 0.05 M, pH 4.5).

The shielding efficiency of each investigated substance is determined from its chromatogram as follows: The total amount of bound P, T (mg), is taken as the sum of P in the elution peak, E (mg), and in the acetic acid peak, C (mg). The "elution percentage", E/T (%), is defined as the fraction of the bound P eluted from the column by the investigated substance. The "optimum concentration" (M) of an investigated substance is defined as the concentration corresponding to the highest point of the elution peak. The shielding efficiency is evaluated by combining the optimum concentration and the elution percentage. A substance with a high shielding efficiency thus provides a high elution percentrage at a low optimum concentration.

In the method according to the present invention the chromatographic column is first equilibrated with the liquid containing the shielding substance which will result in the formation of a complex between the shielding substance in said liquid and the boronate anions of the polymer in the column. Then the liquid containing glyco-containing entities, e.g. glycoproteins dissolved or suspended therein is applied to the column, which will result in the formation of boronate-glyco-complexes. The column is then washed with the same buffer until there is no detectable protein in the effluent.

The bound protein is then eluted in accordance with an embodiment of the present invention by using a buffer solution containing the substance capable of forming complexes with boronic acid/boronate anions at a higher concentration than that used in the liquid in which the glyco-containing entities were dissolved/suspended or containing another substance capable of displacing the glycosylated entity or entities.

After elution is finished, the polymer modified with boronic acid/boronate anions is regenerated prior to the next use by a solution with low pH, for instance an acetic acid solution at pH 4.5.

According to a further embodiment of the present invention elution is carried out by incrementally increasing the concentration of the substance capable of forming complexes with boronic acids/boronate anions (i.e. the "shielding substance") in the eluting solution in order to separate glyco-containing entities of different types and/or degrees of glycosylation.

After recovery of the eluate containing glyco-containing entities the shielding substance is removed from said eluate.

The method according to the present invention may also be applied on an aqueous solution of a crude glycoprotein product isolated from a sample by a method other than that of the present inveniton and containing non-glycosylated protein impurities with the aim of purifying said product.

According to another aspect of the present invention there is provided a method of interactions other than glyco-boronate in boronate chromatography of samples containing glyco-containing and non-glycosylated entities dissolved/suspended in a liquid, wherein binding of the glyco-containing entities to the boronic acids/boronate anions to form a boronate-glyco-complex is carried out by using a liquid containing a substance capable of forming complexes with boronic acids/ boronate anions which complexes are weaker than the boronate-glyco-complex but stronger than complexes formed by interactions others than glyco-boronate.

Substances to be used in the method of this aspect of the invention are as set forth previously.

The invention will now be further illustrated by means of a number of examples which should not be construed as limiting the present invention.

### EXAMPLES

### Abbreviations used

- APBA: m-aminophenylboronic acid
- cht: chymotrypsin
- cht-mal: maltose-modified chymotrypsin
- EPPS: N-(2-hydroxyethyl)piperazine-N'-(3-propanesulfonic acid)
- Na-phosphate: sodium phosphate
- Tris: tris(hydroxymethyl)aminomethane
- MW: molecular weight

### Materials and methods

### Materials

Anthrone, D-arabinose, D-mannitol, 1-o-methyl-α-D-glucopyranoside, 1-o-methyl-α-D-mannopyranoside, D-sorbitol, tris(hydroxymethyl)aminomethane, *m*-aminophenyl boronic acid agarose (product no. A-8312, 40-80 µmoles APBA per ml packed gel) and α-chymotrypsin (E.C.3.4.21.1, C.4129) were purchased from Sigma (St. Louis, MO, USA). S-(+)-erythrulose hydrate, N-tris(hydroxymethyl)methylacrylamide, (1R,3R, 4R, 5R)-quinic acid pentaerythritol, D-ribose, 1,3,5-tris(2-hydroxyethyl)cyanuric acid, D-threitol and xylitol were obtained from Aldrich (Milwaukee, Wisconsin, USA). Glycerol, D,L-lactic acid and polyvinyl alcohol (MW approximately 115000) were products from BDH (Poole, England). N-Tris-(hydroxymethyl)methyl-2-aminoethanesulfonic acid, 1,1,1-tris (hydroxymethyl)ethane and triethanolamine were from Fluka Chemie AG (Buchs, Switzerland). Merck KgaA (Darmstadt, Germany) supplied D-maltose, D-lactose, D-glucose, D-galactose, D-fructose and sucrose. Neopentyl glycol and trimethylolpropane were generous gifts from Perstorp AB (Perstorp, Sweden). Bio-Rad protein dye reagent concentrate (catalogue no. 500-0006) was bought from Bio-Rad and was utilised according to the instructions given by the supplier (Hercules, California, USA). Sodium phosphate, EPPS, sodium cyanoborohydride, sodium chloride, hydrochloric acid and acetic acid were of analytical grade. All chemicals were used without further purification. Dialysis membrane (Spectra/Pro1 Membrane MWCO: 6-8,000) was bought from Spectrum Laboratories, Inc. (Ft.lauderdale, FL&Savannah, GA, USA).

### Protein assay

The absorbance at 280 nm was measured and the concentration of cht was calculated as: [Cht]_{mg/ml} = 0.49 × A_{280 nm/ml} [18]. This method was used when there was no contribution to the absorption at 280 nm from other components in the sample. The Bio-Rad protein assay was utilised when there was interference. This assay technique was developed based on the Bradford method [19]. A 5.0 ml volume of diluted dye reagent (1 part Dye Reagent Concentration mixed with 4 parts distilled, deionized water) was added to 100 µl of the standard and sample solutions. α-Cht was chosen as standard. After incubating at room temperature for at least 5 minutes, the absorbance was measured at 595 nm

### Carbohydrate assay

The carbohydrate content of the neoglycoproteins was analysed by the anthrone-sulfuric acid method [20]. The sample (1 ml, 10 - 50 µg/ml) was mixed with 2 ml of anthrone-sulfuric acid reagent (0.2 g anthrone dissolved in 100 ml concentrated sulfuric acid) and incubated for 10 minutes in boiling water. The absorbance was detected at 620 nm after the temperature of the tested samples reaching room temperature. Glucose was used as standard [21].

### Modification of α-chymotrypsin with maltose (preparation of neoglycoprotein

Maltose was coupled to cht using reductive amination method [22] with modification [21]. Chymotrypsin (5 mg) was dissolved in 0.1 M Na-phosphate buffer (1 ml, pH 7.2 ). Sodium cyanoborohydride (20 mg) and maltose (20 mg) were added to the solution. The mixture was incubated at room temperature for three days and dialysed several times against 0.01 mM HCl at 4°C for 24 hours. The final sample consisted of both non-glycosylated cht and cht-mal. The overall molar ratio of maltose to cht of the sample was 12.1.

### Chromatographic system

All chromatographic processes were carried out on a Delta Prep 3000 system purchased from Waters (Milford, MA, USA ). It is composed of a Waters 600E system controller, a Waters 484 tunable absorbance detector and a Waters pump 600. The fraction collector was bought from Gilson, model 201 (Middleton, WI, USA). All chromatographic columns were supplied by Bio-Rad (Hercules, California, U.S.A.).

### Exampl es 1-22 (invention) and 23 -28 (comparative)

### Evaluation of potential shielding reagents

### Chromatography of native chymotrypsin under non-shielding condition

APBA agarose was packed into the column (0.7 I.D. × 3.9 cm) and equilibrated with 0.05 M EPPS-NaOH (pH 8.5). α-Cht (5 mg) was dissolved in the same buffer (1 ml) and applied to the column. The column was washed thoroughly with the same buffer until there was no protein absorption in the effluent. Acetic acid (0.05 M, pH 4.5) was applied to elute the bound protein. The flow rate was 0.2 ml/min during the whole chromatographic process.

### Chromatography of native chymotrypsin under shielding condition

The column (1.0 I.D. × 12.6 cm) packed with APBA agarose was equilibrated with 0.05 M Na-phosphate, 0.5 M NaCl, pH 7.0. α-Cht (30 mg) was dissolved in the 10 ml of the same buffer and loaded onto the column. The column was washed thoroughly with the same buffer until there was no protein absorption in the effluent. Elution was carried out by applying a linear concentration gradient of the investigated reagent dissolved in 0.02 M EPPS-NaOH, 0.5 M NaCl, pH 8.0. The total gradient elution volume was 20 times the bed volume. The column was finally rinsed with acetic acid (0.05 M, pH 4.5). The flow rate was 0.8 ml/min for loading and washing and 1.0 ml/min for elution.

The shielding efficiency of each investigated reagent was determined from its chromatogram as follows: The total amount of bound cht, T (mg), was taken as the sum of the cht in the elution peak, E (mg), and in the acetic acid peak, C (mg). The *elution percentage*, E/T (%), was defined as the fraction of the bound cht eluted from the column by the investigated reagent. The *optimum concentration* (M) of an investigated reagent was defined as the concentration corresponding to the highest point of the elution peak. The shielding efficiency was evaluated by combining the *optimum concentration* and the *elution percentage*. A reagent with a high shielding efficiency thus provides a high elution *percentage* at a low *optimum concentration.*

The results are given in the Table 1.

### Chromatography of native chymotrypsin under shielding conditions

The column (0.9 I.D. x 2.4 cm) packed with APBA agarose was equilibrated with the buffer containing a shielding reagent (Tris, for example): 0.05 M Tris, 0.5 M NaCl, pH 8.0. α-Cht (3.5 mg) was dissolved in the same buffer and loaded to the column. The column was washed with same buffer until there was no detectable protein in the effluent. Acetic acid (0.05 M, pH 4.5) was used to regenerate the column. Result: No Cht was bound to the column and hence not eluted with acetic acid. The flow rate was 3 cm/h for the binding and 17 cm/h for regeneration.

**Table 1 Shielding efficiency of polyhydroxyl chemicals**

| Ex. No. | Polyhydroxyl chemicals (invention) | Optimum concentration of hydroxyl chemicals (M) | Elution percentage of the bound cht (%) |
|---|---|---|---|
| 1. | Pentaerythritol | 0.076 | > 99 |
| 2. | Tris(hydroxymethyl)aminomethane (Tris) | 0.12 | > 99 |
| 3. | Triethanolamine | 0.12 | > 99 |
| 4. | N-Tris(hydroxymethyl)methyl-2-aminoethanesulfonic acid | 0.13 | > 99 |
| 5. | 1,1,1-Tris(hydroxymethyl)ethane | 0.13 | > 99 |
| 6. | D-Ribose | 0.15 | 99 |
| 7. | (1R, 3R, 4R, 5R)-Quinic acid | 0.16 | 97 |
| 8. | N-Tris(hydroxymethyl)methyl-acrylamide | 0.17 | 99 |
| 9. | Trimethylolpropane | 0.25 | > 99 |
| 10. | D-Mannitol | 0.31 | > 99 |
| 11. | D-Sorbitol | 0.32 | > 99 |
| 12. | D-Fructose | 0.33 | > 99 |
| 13. | Xylitol | 0.33 | 97 |
| 14. | D-Threitol | 0.34 | 97 |
| 15. | Polyvinyl alcohol (MW (approximately) 115000) | 0.34 (monomer) | 90 |
| 16. | D-Lactose | 0.35 | 90 |
| 17. | D-Arabinose | 0.37 | 99 |
| 18. | D-Galactose | 0.43 | > 99 |
| 19. | S(+)-Erythrulose hydrate | 0.45 | 96 |
| 20. | D-Maltose | 0.61 | 99 |
| 21. | D-Glucose | 0.65 | 90 |
| 22. | Sucrose | 0.80 | 95 |

| Polyhydroxyl chemicals (comparision) | | | |
|---|---|---|---|
| 23. | 1-o-Methyl-α-D-mannopyranoside | 0.78 | 83 |
| 24. | 1,3,5-Tris(2-hydroxyethyl)cyanuric acid | 0.62 | 70 |
| 25. | D,L-Lactic acid | 1.0 | 70 |
| 26. | Neopentyl glycol | 1.0 | 55 |
| 27. | 1-o-Methyl-α-D-glucopyranoside | > 1.0 | 35 |
| 28. | Glycerol | 1.0 | 0 |

From table 1 it can be seen that the comparative substances (Examples 23 to 28) had a low shielding efficiency compared to that of the substances according to the invention. Not more than 83 % of the bound cht can be eluted using as high concentrations as 0.8 M or more. At a concentration of 1.0 M of glycerol, neopentyl glycol and lactic acid, the percentage of bound cht eluted from column was 0%, 55% and 70% respectively. Although glycerol contains three hydroxyl groups, the rigid configuration of this molecule makes interaction with boronate anion involving all three hydroxyls impossible. Neopentyl glycerol contains two hydroxyls and its interaction with boronate anion is thus restricted to two hydroxyls. Lactic acid interacts with the boronate anion via charge transfer, but only complexes with two of the three hydroxyls of the boronate anion. Methyl-α-D-mannopyranoside and methyl-α-D-glucopyranoside do not contain C₁-OH and their shielding efficiency is reduced as compared to that of D-glucose and D-galactose. This fact suggests that C₁-OH is important for the complex formation with the boronate anion. Methyl-α-D-glucopyranoside had an even lower shielding efficiency than methyl-α-D-mannopyranoside, indicating that the hydroxyl groups at C₂, C₃ and C₆ positions are more suitable for the interaction than those at C₂, C₄ and C₆ positions. A single carbon/nitrogen atom is a more suitable core for the formation of tridentate complexes compared to 1,3,5-tris(2-hydroxy-ethyl)cyanuric acid.

### Example 29

### Chromatography of a mixture of cht and cht-mal under shielding condition and re-chromatography of fractions obtained from the first chromatography

The APBA agarose column (0.7 I.D. × 10 cm) was equilibrated with the buffer containing a shielding reagent, for example Tris (0.12 M Tris-HCl, 0.02 M EPPS-NaOH, 0.5 M NaCl, pH 8.0). The sample (4 mg) consisting of both non-glycosylated cht and cht-mal was dissolved in the same buffer and applied to the column. The column was washed with the same buffer until there was no detectable protein in the effluent. The bound protein was then eluted using acetic acid (0.05 M, pH 4.5). The flow rate was 0.2 ml/min for binding and washing and 0.4 ml/min for elution.

Cht was not bound to the column and appeared in the breakthrough fraction while cht-mal was bound and eluted from the matrix using acetic acid.

The breakthrough and acetic acid elution fractions obtained from the chromatography presented above were dialysed thoroughly against 0.12 M Tris-HCl, 0.02 M EPPS-NaOH, 0.5 M NaCl, pH 8.0. The breakthrough fraction was then applied on the same column and rechromatographed according to the same protocol. The same procedure was repeated for the acetic acid elution fraction. The retention volumes of these two peaks were exactly the same in the rechromatography as in the first chromatography.

### Example 30

### Chromatography of a mixture of cht and cht-mal under non-shielding condition and re-chromatography of fractions obtained from the initial chromatography

An APBA agarose column (0.7 I.D. × 10 cm) was equilibrated with the loading buffer containing no shielding reagent, 0.02 M EPPS-NaOH, 0.5 M NaCl, pH 8.0. A sample (4 mg) consisting of both non-glycosylated cht and cht-mal was dissolved in the same buffer and applied to the column. The column was washed with 7 bed volumes of the same buffer. Both cht and cht-mal were shown to be bound to the boronate column. The bound protein was then eluted respectively with buffer B (0.02 M EPPS-NaOH, 0.5 M NaCl, 0.12 M Tris, pH 8.0), buffer C (0.02 M EPPS-NaOH, 0.5 M NaCl, 0.5 M Tris, pH 8.0) and acetic acid (0.05 M, pH 4.5). The flow rate was 0.2 ml/min for binding and washing and 0.4 ml/min for elution.

The fraction eluted by buffer B containing 0.12 M Tris was collected and dialysed against loading buffer, 0.02 M EPPS, 0.5 M NaCl, pH 8.0 and rechromatographed. The retention volumes were the same as in the initial chromatography illustrating that the separation was efficient. The sugar content of this fraction was also analysed. No detectable sugar content was obtained in this fraction.

### References

[1] R. K. Scope, in: Protein purification principles and practice. Springer-Verlag, New York, 1987.
[2] M. Rosenberg, J. Weibers and P. Gilham, Biochem. 11 (1972) 3623.
[3] C. Elliger, B. Chan, and W. Stanley, J. Chromatogr. 104 (1975) 57.
[4] F. A. Middle, A. Bannister, A. J. Belingham and P. D. G. Dean, Biochem. J. 209 (1983) 771.
[5] R. Maestas, J. Prieto, G. Duehn and J. Hageman, J. Chromatogr. 189 (1980) 225.
[6] A. Bergold and W. H. Scouten, In: Solidphase Biochemistry (Analytical and Synthetic Methods). John Wiley & Sons, 1983, p. 149.
[7] S. J. Cartwright and S. G. Waley, Biochem. J. 221 (1984) 505.
[8] D. Matthews, R. Alden, J. Birktoft, S. Freer and J. Krant, J. Biol. Chem. 250 (1975) 7120.
[9] J. D. Rawn and G. E. Lienhard, Biochem. 13 (1974) 3124.
[10] A. Tulinsky and R. Blevins, J. Biol. Chem. 262 (1987) 7737.
[11] C. Zittle. Advan. Enzym. 12 (1951) 493.
[12] B. M. Brena, F. Batista-Viera, L. Rydén and J. Porath, J. Chromatogr. 604 (1992) 109.
[13] V. K. Akparov and V. M. Stepanov, J. Chromatogr. 155 (1978) 329.
[14] S. Fulton, Amicon Corporation, Scientific System Division, Danvers, MA, U.S.A.(1981).
[15] J. H. Hageman and G. D. Kuehn, Anal. Biochem. 80 (1977) 547.
[16] I. Yu. Galaev and B. Mattiasson, Bio/Technology 12 (1994) 1086.
[17] B. Mattiasson, I. Yu. Galaev and N. Garg, J. Mol. Recogn. 9 (1996) 509.
[18] Worthington Enzyme Manual, Freehold, New Jersey. U. S. A., 1972, p.129.
[19] M. Bradford, Anal. Biochem. 72 (1976) 248.
[20] T. A. JR. Scott and E. H. Melvin, Anal. Chem. 25 (1953) 1656.
[21] Y. C. Li, E. L. Larsson, H. Jungvid, I. Yu. Galaev and B. Mattiasson, (manuscript).
[22] B. A. Schwartz and G. R. Gary, Arch. Biochem. Biophys. 181 (1977) 542.

## Claims

1. Method for the separation of at least one glyco-containing entity dissolved/suspended in a buffer solution, which method comprises the steps of:
(a) equilibrating a polymer, which polymer has a boronic acid covalently coupled thereto, with said buffer solution;
(b) contacting said at least one glyco-containing entity dissolved/suspended in said buffer solution with the polymer equilibrated according to step (a) to form a boronate-glyco-complex; and
(c) releasing said glyco-containing entity or entities from the boronate-modified polymer;
wherein the buffer solution used in step (a) and (b) contains one or more substances capable of forming complexes with boronic acids/boronate anions, wherein the bindings in the complexes are weaker than the boronate-glyco-complex but stronger than complexes formed by interactions others than glyco-boronate.

2. Method according to claim 1, wherein said substance capable of forming complexes with boronic acids/boronate anions contains a structure of the formula (HOCH₂)₃C- or (HOCH₂CH)₃N.

3. Method according to claim 2, wherein said substance capable of forming complexes with boronic acids/boronate anions is selected from the group consisting of pentaerythritol, tris(hydroxymethyl)aminomethane, triethanolamine, N-tris-(hydroxymethyl)methyl-2-aminoethanesulfonic acid, 1,1,1-tris(hydroxymethyl)ethane, N-tris(hydroxymethyl)methylacrylamide, trimethylolpropane.

4. Method according to claim 1, wherein said substance capable of forming complexes with boronic acids/boronate anions is (1R, 3R, 4R, 5R)-quinic acid.

5. Method according to claim 1, wherein said substance capable of forming complexes with boronic acids/boronate anions is selected from the group consisting of polyols and mono-and disaccharides.

6. Method according to claim 5, wherein said polyols and mono- and disaccharides are selected from the group consisting of D-mannitol, D-sorbitol, D-fructose, xylitol, D-threitol, polyvinyl alcohol, D-ribose, D-lactose, D-arabinose, D-galactose, S(+)-erythrulose hydrate, D-maltose, D-glucose and sucrose.

7. Method according to claim 1, wherein the pH of the liquid in which said glyco-containing entity or entities is/are dissolved/suspended is within the range of from 7.5 to 8.5, preferably 8.0.

8. Method according to claim 1, wherein the glyco-containing entity or entities is/are released from the boronate-modified polymer by elution using a solution containing said substance capable of forming complexes with boronic acids/boronate anions at a higher concentration than during the formation of boronate-glyco-complexes or containing another substance capable of displacing the glycosylated entity or entities.

9. Method according to claim 8, wherein, after elution is finished, the polymer modified with boronic acid/boronate anions is regenerated prior to the next use by a solution with low pH, e.g. acetic acid solution at pH 4.5.

10. Method according to any of claims 1-9, wherein the glyco-containing entity or entities is/are released from the boronate-modified polymer by elution carried out by incrementally increasing the concentration of the substance capable of forming complexes with boronic acids/boronate anions in the eluting solution in order to separate glyco-containing entities of different types and/or degrees of glycosylation.

11. Method according to any of claims 1-10, which is applied on an aqueous solution of a crude glycoprotein product containing non-glycosylated protein impurities with the aim of purifying said product.

12. Method of reducing interactions other than glyco-boronate in boronate chromatography of samples containing glyco-containing and non-glycosylated entities dissolved/suspended in a liquid, wherein binding of the glyco-containing entities to the boronic acids/boronate anions to form a boronate-glyco-complex is carried out by using a liquid containing a substance capable of forming complexes with boronic acids/boronate anions which complexes are weaker than the boronate-glyco-complex but stronger than complexes formed by interactions others than glyco-boronate.

13. Method according to claim 12, wherein said substance capable of forming complexes with boronic acids/boronate anions is as set forth in any of claims 2 to 6.

## Patentansprüche

1. Verfahren zur Abtrennung mindestens einer Glyko-enthaltenden Einheit, welche in einer Pufferlösung gelöst/suspendiert ist, wobei das Verfahren die Schritte umfasst:
(a) Equilibrierung eines Polymers, wobei das Polyer eine kovalent gebundene Borsäure aufweist, mit der Pufferlösung;
(b) In-Kontakt-bringen der mindestens einen Glyko-enthaltenden Einheit, die in der Pufferlösung gelöst/suspendiert ist, mit dem Polymer, welches gemäß Schritt (a) equilibriert ist, um einen Borat[boronate]-Glyko-Komplex auszubilden und
(c) Freisetzen der Glyko-enthaltenden Einheit oder Einheiten aus dem Borat-modifzierten Polymer, umfasst,
wobei die Pufferlösung, welche in Schritt (a) und (b) verwendet wird, eine oder mehrere Substanzen enthält, die zur Ausbildung von Komplexen mit Borsäuren/Boratanionen in der Lage sind, wobei die Bindungen in den Komplexen schwächer als der Borat-Glyko-Komplex, aber stärker als Komplexe sind, welche durch andere Interaktionen als Glyko-Borat ausgebildet werden.

2. Verfahren nach Anspruch 1, wobei die Substanz, welche zur Ausbildung von Komplexen mit Borsäuren/Boratanionen in der Lage ist, eine Struktur der Formel (HOCH₂)₃C- oder (HOCH₂CH)₃N enthält.

3. Verfahren nach Anspruch 2, wobei die Substanz, welche zur Ausbildung von Komplexen mit Borsäuren/Boratanionen in der Lage ist, ausgewählt ist aus der Gruppe bestehend aus Pentaerythritol, Tris(hydroxymethyl)-aminomethan, Triethanolamin, N-Tris(hydroxymethyl)-methyl-2-aminoethansulfonsäure, 1,1,1-Tris(hydroxymethyl)ethan, N-Tris(hydroxymethyl)methylacrylamid und Trimethylolpropan.

4. Verfahren nach Anspruch 1, wobei die Substanz, welche zur Ausbildung von Komplexen mit Borsäuren/Boratanionen in der Lage ist, (1R, 3R, 4R, 5R)-Chinasäure ist.

5. Verfahren nach Anspruch 1, wobei die Substanz, welche zur Ausbildung von Komplexen mit Borsäuren/Boratanionen in der Lage ist, ausgewählt ist aus der Gruppe bestehend aus Polyolen und Mono- und Disacchariden.

6. Verfahren nach Anspruch 5, wobei die Polyole und Mono-und Disaccharide ausgewählt sind aus der Gruppe bestehend aus D-Mannitol, D-Sorbitol, D-Fruktose, Xylit, D-Threitol, Polyvinylalkohol, D-Ribose, D-Laktose, D-Arabinose, D-Galaktose, S(+)-Erythrulosehydrat, D-Maltose, D-Glukose und Saccharose.

7. Verfahren nach Anspruch 1, wobei der pH der Flüssigkeit, in welcher die Glyko-enthaltende Einheit oder Einheiten gelöst/suspendiert ist/sind, innerhalb des Bereichs von 7,5 bis 8,5, vorzugsweise 8,0 ist.

8. Verfahren nach Anspruch 1, wobei die Glyko-enthaltende Einheit oder Einheiten aus dem Borat-modofizierten Polymer durch Eluierung unter Verwendung einer Lösung, freigesetzt wird/werden, welche die Substanz enthält, welche zur Ausbildung von Komplexen mit Borsäuren/Boratanionen in der Lage ist, in einer höheren Konzentration als während der Ausbildung der Borat-Glyko-Komplexe, oder enthaltend eine andere Substanz, welche in der Lage ist, die glykosylierte(n) Einheit oder Einheiten zu ersetzen.

9. Verfahren nach Anspruch 8, wobei nachdem die Eluierung beendet ist das Polymer, welches mit Borsäure/Boratanionen modifiziert ist, vor der nächsten Verwendung durch eine Lösung mit niedrigem pH regeneriert wird, beispielsweise Essigsäurelösung mit pH 4,5.

10. Verfahren nach einem der Ansprüche 1-9, wobei die Glyko-enthaltende(n) Einheit oder Einheiten aus dem Borat-modofizierten Polymer durch Eluierung freigesetzt werden, welche durch schrittweise Erhöhung der Konzentration der Substanz, welche zur Ausbildung von Komplexen mit Borsäuren/Boratanionen in der Lage ist in der Eluationslösung durchgeführt wird, um die glyko-enthaltenden Einheiten verschiedener Typen und/oder Grade an Glykosilierung zu trennen.

11. Verfahren nach einem der Ansprüche 1-10, welches auf eine wässrige Lösung eines rohen Glykoprotein-Produkts, welches nicht-glykosilierte Proteinverunreinigungen enthält, angewandt wird, mit dem Ziel der Reinigung des Produkts.

12. Verfahren zur Verringerung von anderen Interaktionen als Glyko-Borat in der Borat-Chromatographie von Proben, welche glyko-enthaltende und nicht glykosilierte Einheiten gelöst/suspendiert in einer Flüssigkeit enthalten, wobei die Bindung der glyko-enthaltenden Einheiten an die Borsäuren/Boratanionen zur Ausbildung eines Borat-Glyko-Komplexes durch Verwendung einer Flüssigkeit durchgeführt wird, welche eine Substanz enthält, die zur Ausbildung von Komplexen mit Borsäuren/Boratanionen in der Lage ist, deren Komplexe schwächer sind als der Borat-Glyko-Komplex, aber stärker als Komplexe, welche durch andere Interaktionen als Glyko-Borat ausgebildet werden.

13. Verfahren nach Anspruch 12, wobei die Substanz, welche zur Ausbildung von Komplexen mit Borsäuren/Boratanionen in der Lage ist, die in jedem der Ansprüche 2 bis 6 beschriebene ist.

## Revendications

1. Procédé de séparation d'au moins une entité contenant du sucre dissoute/en suspension dans une solution de tampon, lequel procédé comprend les étapes consistant à :
(a) équilibrer un polymère auquel est couplé de manière covalente un acide boronique, avec ladite solution de tampon ;
(b) mettre en contact ladite au moins une entité contenant du sucre dissoute/en suspension dans ladite solution de tampon avec le polymère équilibré selon l'étape (a), afin de former un complexe boronate-sucre ; et
(c) libérer ladite ou lesdites entités contenant du sucre du polymère modifié par du boronate ;
dans lequel la solution de tampon utilisée dans l'étape (a) et dans l'étape (b) contient une ou plusieurs substances capables de former des complexes avec des acides boroniques/anions de boronate, les liaisons dans les complexes étant plus faibles que le complexe boronate-sucre mais plus fortes que les complexes formés par des interactions autres que les interactions boronate-sucre.

2. Procédé selon la revendication 1, dans lequel ladite substance capable de former des complexes avec des acides boroniques/anions de boronate contient une structure de formule (HOCH₂)₃C- ou (HOCH₂CH)₃N.

3. Procédé selon la revendication 2, dans lequel ladite substance capable de former des complexes avec des acides boroniques/anions de boronate est choisie dans le groupe constitué par le pentaérythritol, le tris(hydroxyméthyl)aminométhane, la triéthanolamine, l'acide N-tris(hydroxyméthyl)méthyl-2-aminoéthanesulfonique, le 1,1,1-tris(hydroxyméthyl)éthane, le N-tris(hydroxyméthyl)méthylacrylamide, le triméthylolpropane.

4. Procédé selon la revendication 1, dans lequel ladite substance capable de former des complexes avec des acides boroniques/anions de boronate est l'acide (1R, 3R, 4R, 5R)-quinique.

5. Procédé selon la revendication 1, dans lequel ladite substance capable de former des complexes avec des acides boroniques/anions de boronate est choisie dans le groupe constitué par les polyols et les mono- et disaccharides.

6. Procédé selon la revendication 5, dans lequel lesdits polyols et mono- et disaccharides sont choisis dans le groupe constitué par le D-mannitol, le D-sorbitol, le D-fructose, le xylitol, le D-thréitol, l'alcool polyvinylique, le D-ribose, le D-lactose, le D-arabinose, le D-galactose, le S(+)-érythrulose hydraté, le D-maltose, le D-glucose et le saccharose.

7. Procédé selon la revendication 1, dans lequel le pH du liquide
dans lequel ladite ou lesdites entités contenant du sucre sont dissoutes/en suspension se situe dans la plage allant de 7,5 à 8,5, de préférence est égal à 8,0.

8. Procédé selon la revendication 1, dans lequel la ou les entités contenant du sucre sont libérées du polymère modifié par du boronate par élution, en utilisant une solution contenant ladite substance capable de former des complexes avec des acides boroniques/anions de boronate à une concentration plus élevée que pendant la formation des complexes boronate-sucre ou contenant une autre substance capable de déplacer la ou les entités glycosylées.

9. Procédé selon la revendication 8, dans lequel, une fois l'élution terminée, le polymère modifié par l'acide boronique/anions de boronate est régénéré avant l'utilisation suivante au moyen d'une solution à pH bas, par exemple une solution d'acide acétique à un pH de 4,5.

10. Procédé selon l'une quelconque des revendications 1 à 9, dans lequel la ou les entités contenant du sucre sont libérées du polymère modifié par du boronate par une élution réalisée en augmentant de manière incrémentielle la concentration de la substance capable de former des complexes avec des acides boroniques/anions de boronate dans la solution d'élution, afin de séparer les entités contenant du sucre de différents types et/ou degrés de glycosylation.

11. Procédé selon l'une quelconque des revendications 1 à 10, lequel est appliqué à une solution aqueuse d'un produit glycoprotéique brut contenant des impuretés protéiques non glycosylées, dans le but de purifier ledit produit.

12. Procédé de réduction des interactions autres que les interactions boronate-sucre dans la chromatographie au boronate d'échantillons contenant des entités contenant du sucre et des entités non glycosylées dissoutes/en suspension dans un liquide, dans lequel la liaison des entités contenant du sucre aux acides boroniques/anions de boronate pour former un complexe boronate-sucre est réalisée en utilisant un liquide contenant une substance capable de former des complexes avec des acides boroniques/anions de boronate, lesquels complexes sont plus faibles que le complexe boronate-sucre mais plus forts que les complexes formés par des interactions autres que les interactions boronate-sucre.

13. Procédé selon la revendication 12, dans lequel ladite substance capable de former des complexes avec des acides boroniques/anions de boronate est telle que décrite dans l'une quelconque des revendications 2 à 6.
